# EUROPÄISCHE PATENTSCHRIFT

(11) **EP 2 632 629 B1**
(45) Veröffentlichungstag und Bekanntmachung des Hinweises auf die Patenterteilung: **03.10.2018**
(21) Anmeldenummer: 11776407.6
(22) Anmeldetag: 25.10.2011
(51) Int. Cl.: B23B 31/02, B23K 9/20, B23B 31/12, B23K 37/04, B25B 23/10, B23P 19/00, B23K 20/12

(54) **VORRICHTUNG ZUR POSITIONIERUNG UND ZUFÜHRUNG VON BEFESTIGUNGSELEMENTEN**
DEVICE FOR POSITIONING AND SUPPLYING FIXING ELEMENTS
DISPOSITIF DE POSITIONNEMENT ET D'AMENÉE D'ÉLÉMENTS DE FIXATION

(30) Priorität: 25.10.2010 DE 102010060141
(43) Veröffentlichungstag der Anmeldung: 04.09.2013
(73) Patentinhaber: EJOT GmbH & Co. KG, 57319 Bad Berleburg (DE)
(72) Erfinder: MAIWALD, Mario, 99831 Creuzburg (DE); THIEM, Jörg, 98544 Zella-Mehlis (DE); DUBIEL, Gerhard, 99897 Tambach-Dietharz (DE); MIELISCH, Marco, 99099 Erfurt (DE); ZEBISCH, Sebastian, 99897 Tambach-Dietharz (DE); WERKMEISTER, Marco, 99894 Leinatal (DE); OSCHMANN, Nico, 99894 Friedrichroda (DE)
(74) Vertreter: Puschmann Borchert Bardehle Patentanwälte Partnerschaft mbB
(86) Internationale Anmeldenummer: PCT/EP2011/068581
(87) Internationale Veröffentlichungsnummer: WO 2012/055830

(56) Entgegenhaltungen:
- DE-A1-102004 039 398
- GB-A- 379 682
- GB-A- 2 138 453
- US-A- 4 995 543

## Beschreibung

Die Erfindung bezieht sich auf eine Vorrichtung zur Zuführung und Positionierung von Befestigungselementen umfassend ein Futter, welches mit zwei unter Federspannung stehenden Stoppteilen versehenen ist, und ein Befestigungselement zur Weiterverarbeitung hält.

Eine derartige Vorrichtung ist in der Offenlegungsschrift DE 10 2004 039 398 A1 offenbart. Die bekannte Vorrichtung dient dazu, für eine Reibschweißverbindung vorgesehene Befestigungselemente, die im Wesentlichen einen definierten, runden Querschnitt besitzen, über eine Zuführungsleitung einer Aufnahmeposition mit einem Futter zuzuführen, in der die Befestigungselemente jeweils einzeln durch zwei unter Federspannung stehende Stoppteile angehalten und in eine Warteposition gebracht werden, aus der sie dann durch ein Druckstück in Drehung versetzt und an ein Bauteil zur Herstellung einer Reibschweißverbindung angedrückt werden. In dem mit den zwei Stoppteilen versehenen Futter wird das jeweilige Befestigungselement nur lose in undefinierter Lage gehalten. Die bekannte Vorrichtung ist daher nur für die Verarbeitung von Reibschweißteilen, insbesondere Reibschweißbolzen, geeignet, die hinsichtlich ihrer Verarbeitungslage erst beim endgültigen Verarbeitungsvorgang in eine notwendige Position gebracht werden.

Die GB 2 183 453 offenbart eine Zuführeinrichtung von Nietelementen aus einem Zuführkanal zu einer Nietvorrichtung. Diese weist Greifbacken auf, welche über eine Kurvenscheibe ausgedehnt werden können. Die Kurvenscheibe ist dabei mit dem Nietwerkzeug verbunden wodurch gleichzeitig mit Absenken des Nietwerkzeugs auch eine Öffnung der Greifbacken erfolgt. Dadurch kann das Nietwerkzeug die Nieten bei geöffneten Greifbacken bei seiner Abwärtsbewegung mitnehmen.

Der Erfindung liegt die Aufgabe zugrunde, die Vorrichtung so zu gestalten, dass die Befestigungselemente beim Transport in die Verarbeitungsposition jeweils genau ausgerichtet geführt und vorvereinzelt werden, um in einer Verarbeitungslage, die hohen Genauigkeitsanforderungen ausgesetzt ist verarbeitet zu werden. Darüber hinaus soll die Vorrichtung in der Lage sein, Befestigungselemente unterschiedlicher Größe zu verarbeiten.

In bekannter Weise umfasst eine Vorrichtung zur Zuführung und Positionierung von Befestigungselementen ein mit zwei unter Federspannung stehende Stoppteile versehenes Futter, welches ein Befestigungselement zur Weiterverarbeitung hält.

Erfindungsgemäß geschieht dies dadurch, dass die Stoppteile der Vorrichtung als Spannbacken ausgebildet sind, denen ein zwischen diese greifendes Stellelement zugeordnet ist, das mit einer Einschnürung und zwei benachbarten Erweiterungen versehen ist und mit einem Axialschieber zur Axialbewegung des Stellelementes verbunden ist. Die Bewegung des Stellelements dient zur Öffnung und Schließung des Futters unter Spreizung der Spannbacken. Bei Öffnung des Futters wird das Befestigungselement zur Verarbeitung in einem Reibschweißvorgang freigegeben.

Hierbei werden, sofern eine Erweiterung des Stellelements zwischen die federbelasteten Spannbacken eingebracht wird, die Spannbacken gespreizt und damit das Futter geöffnet. Liegt jedoch die Einschnürung des Stellelements zwischen den Spannbacken werden die Spannbacken durch Schenkelfedern aneinandergedrückt, wodurch ein sich zwischen den Spannbacken befindliches Befestigungselement gehalten wird. Dadurch kann das Futter eine Aufnahmestellung, also eine Öffnungsstellung zur Aufnahme der Befestigungselemente, eine Schließstellung oder Erfassungsstellung zum Festhalten und eine Verarbeitungsstellung, also eine Öffnungsstellung zum Freigeben der Befestigungselemente zur Weiterverarbeitung einnehmen.

Ferner kann abhängig von der Ausgestaltung der Erweiterungen eine Anpassung des Futters zur Aufnahme von Befestigungselementen unterschiedlicher Größe erreicht werden, wobei der wirksame Durchmesser, der durch die axiale Bewegung des Stellelements einstellbar ist.

Um dem Stellelement die notwendige Bewegungsmöglichkeit in seiner Axialrichtung zu geben, sieht man zweckmäßig hierzu einen translatorisch wirkenden Antrieb vor. Dieser kann einen Drehmotor umfassen, der über ein Übertragungselement eine Axialbewegung des Stellelements bewirkt. Das Übertragungselement kann als Mutterstück in Verbindung mit einem gewindetragenden Schaft ausgebildet sein, der als Axialschieber wirkt und entsprechend der Drehbewegung des Mutterstücks eine axiale Bewegung des Stellelementes zur Folge hat. Alternativ können auch andere translatorisch wirkende Antriebe Anwendung finden, beispielsweise ein Linearmotor oder ein Schrittmotor in Verbindung mit einer Kugelumlaufspindel.

Das Futter selbst kann man dazu verwenden, eine Vorvereinzelung der zugeführten Befestigungselemente vorzunehmen. Hierzu wird vorteilhaft das Futter vertikal bzw. axial beweglich gelagert.

Diese vertikale Beweglichkeit kann vorteilhaft dadurch ermöglicht werden, dass das Futter durch das Stellelement vertikal gegen eine federbelastete Lagerung bewegbar ist. Die federbelastete Lagerung kann durch Druckfedern gebildet sein, die unter dem Futter angeordnet sind. Diese Lagerung erzeugt eine Rückstellung des Futters in eine axiale bzw. vertikale obere Endlage. Bei einer Abwärtsbewegung des Stellelements werden zum einen die Spannbacken gespreizt und zum anderen das gesamte Futter, insbesondere gegen die Kraft der Druckfedern, nach unten verschoben. Diese Stellung ermöglicht in vorteilhafter Weise die Zuführung eines Befestigungselements in das Futter.

In der Aufwärtsbewegung hingegen schließen sich aufgrund dessen, dass nunmehr die Einschnürung des Stellelements zwischen den Spannbacken liegt die Spannbacken und halten so das Befestigungselement fest. Durch die Aufwärtsbewegung des Stellelements ergibt sich in jedem Fall eine axiale Relativbewegung zwischen dem Stellelement und den Spannbacken.

Durch die unter dem Futter angebrachten Druckfedern wird mit der Aufwärtsbewegung des Stellelements und der damit einhergehenden Entlastung der Druckfedern das Futter nach oben bewegt. Durch die Aufwärtsbewegung des Futters wird eine weitere Zuführung von Befestigungselementen in das Futter verhindert, da die Zuführung der Befestigungselemente in das Futter abhängig von der vertikalen Lage des Futters ist. Ist beispielsweise das Futter nach unten verschoben, können Befestigungselemente aufgenommen werden, ist das Futter vertikal nach oben verschoben, ist die Aufnahme für Befestigungselemente gesperrt.

Darüber hinaus kann durch die Aufwärtsbewegung des Futters ein gehaltenes Befestigungselement zur Weiterverarbeitung einer über dem Futter liegenden Antriebseinheit zugeführt werden, beispielsweise einem Antriebsbit. Die Antriebseinheit dient dazu, ein Befestigungselement insbesondere durch eine Drehbewegung mit einer Unterlage zu verbinden. Es ist eine vertikale Bewegung der Antriebseinheit notwendig, um das Befestigungselement von der Freigabeposition in eine Verarbeitungsposition an der Unterlage zu bringen. Indem das Befestigungselement durch die Vertikalbewegung des Futters an die Antriebseinheit herangeführt wird, kann das Befestigungselement vorübergehend an der Antriebseinheit festgelegt werden. Dies ermöglicht, dass das Befestigungselement während der Vertikal- bzw. Axialbewegung der Antriebseinheit auch entgegen der Schwerkraft sicher an der Antriebseinheit gehalten wird und sehr genau verarbeitet werden kann.

Dass der zu überbrückende Abstand zwischen der Aufnahmeposition des Befestigungselements und der Antriebseinheit von dem Futter zurückgelegt wird, hat den Vorteil, dass nicht die gesamte Antriebseinheit verfahren werden muss, um Antriebseinheit und Befestigungselement nahe aneinander zu bringen. Dies führt zu einer erheblichen Verbesserung des Durchsatzes.

Sobald das Befestigungselement temporär an der Antriebseinheit festgelegt ist, um das Befestigungselement während der Vertikalbewegung der Antriebseinheit an dieser zu fixieren, kann durch eine weitere Aufwärtsbewegung des Stellelements das Futter in eine Öffnungsstellung bzw. Verarbeitungsstellung gebracht werden. In dieser Verarbeitungsstellung können die Spannbacken so weit auseinandergedrückt werden, dass die Antriebseinheit mit dem daran festgelegten Befestigungselement zwischen den Spannbacken hindurch verfahren werden kann. Das Befestigungselement kann dann präzise an einer vorgesehen Position an einer Unterlage, beispielsweise einem Blech befestigt werden.

Nach der bestimmungsgemäßen Befestigung des Befestigungselements kann die Antriebseinheit wieder in ihre Ausgangslage verfahren werden. Sobald die Antriebseinheit nicht mehr zwischen den geöffneten Spannbacken liegt, kann das Stellelement nunmehr wieder nach unten in die Aufnahmestellung verfahren werden, wo ein neues Befestigungselement zugeführt werden kann.

Auf diese Weise, kann durch einen einzigen axialen Bewegungszyklus des Stellelements einfach und schnell sowohl eine Vorvereinzelung der Befestigungselemente als auch eine Zuführung in das Futter erfolgen. Mit derselben Bewegung kann zudem eine Zuführung des Befestigungselements an die Antriebseinheit umgesetzt werden.

Der Übergang zwischen Einschnürung und Erweiterung des Stellelements verläuft im Wesentlichen zweckmäßig stufenlos schräg. Dies gewährleistet eine gleichmäßige Schließ- und Öffnungsbewegung der Spannbacken und verhindert ein Verklemmen des Stellelements zwischen den Spannbacken.

Für die Verarbeitung von Befestigungselementen mit einem ihren Schaft abschließenden Kopf gestaltet man die Vorrichtung zweckmäßig so, dass der Kopf in der Aufnahmestellung auf den Spannbacken aufliegt und mit seinem Schaft zwischen die Spannbacken ragt.

Vorzugsweise weisen die Spannbacken an ihrem vorderen Ende Klauen auf. Diese sind derart geformt, dass in einer Öffnungsstellung zur Aufnahme des Befestigungselements, der Schaft zwischen den Spannbacken hindurchgeführt werden kann, die Klauen dem Befestigungselement jedoch einen Anschlag am Ende der Spannbacken bieten. So wird ein Hindurchgleiten des Befestigungselements zwischen den Spannbacken verhindert.

Die vorübergehende Festlegung der Befestigungselemente an der Antriebseinheit, kann mittels einer Fixiereinrichtung, die mit der Antriebseinheit zusammenwirkt, verbessert werden. Die Fixiereinrichtung kann als Vakuumansaugung, über eine mechanische Klemmung, mittels Druckluft, oder magnetisch wirken.

Die Befestigung eines Befestigungselements erfolgt insbesondere durch Reibschweißen, also eine Drehbewegung und ein gleichzeitiges Andrücken an ein Bauteil.

In den Figuren ist ein Ausführungsbeispiel der Erfindung dargestellt.

Es zeigen:

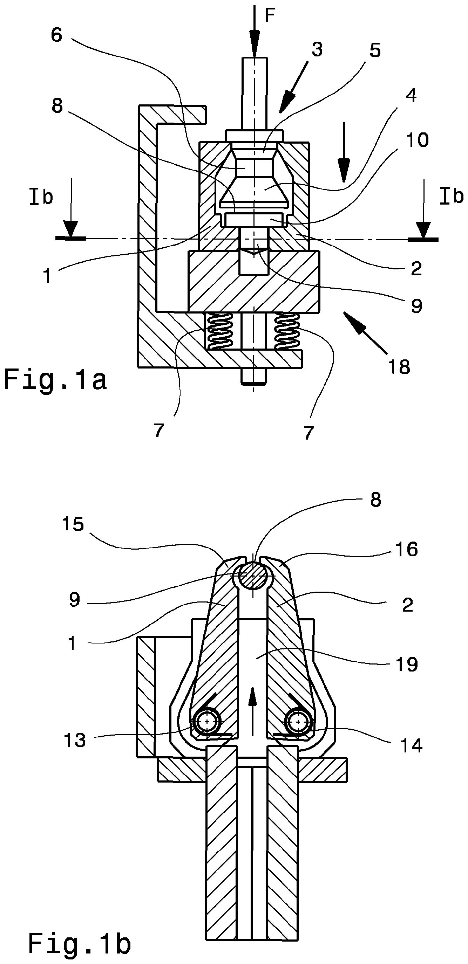

- Figur 1a: einen Schnitt durch das Futter in einer Aufnahmestellung zur Zuführung eines Befestigungselementes;
- Figur 1: b eine Schnittdarstellung entsprechend Ib-Ib;
- Figur 2a: das gleiche Futter in Erfassungsstellung mit eingespanntem Befestigungselement;
- Figur 2b: eine Schnittdarstellung entsprechend IIb-IIb;
- Figur 3a: das Futter in Verarbeitungsstellung zur Weiterverarbeitung eines Befestigungselements;
- Figur 3b: eine Schnittdarstellung entsprechend IIIb-IIIb;
- Figur 4a: die Verarbeitungsvorrichtung in einer Aufnahmestellung ähnlich Figur 1;
- Figur 4b: die Verarbeitungsvorrichtung in einer Erfassungsstellung ähnlich Figur 2, und
- Figur 4c: die Verarbeitungseinrichtung in einer Verarbeitungsstellung ähnlich zu Figur 3.

Das in der Figur 1a im Querschnitt dargestellte Futter 18 zur Positionierung von Befestigungselementen 8 weist zwei Spannbacken 1 und 2 auf, die seitlich voneinander wegschwenkbar und hier in einer geöffneten Lage dargestellt sind, in der die Spannbacken 1, 2 derart geöffnet sind, um ein Befestigungselement 8 aufzunehmen. Die maximal geöffnete Lage ist abhängig von den Abmessungen der hauptsächlich verwendeten Befestigungselemente 8 und der abzudeckenden Bandbreite.

Die Spannbacken 1, 2 werden grundsätzlich durch eine axiale Bewegung (siehe Pfeilrichtung in seiner Mittellinie) eines Stellelements 3 geöffnet und ermöglichen damit die Einführung eines Befestigungselementes 8 mit seinem Kopf 10 und seinem Schaft 9.

Das Stellelement 3 weist in seinem unteren Bereich eine Erweiterung 4 auf, die einen größeren Durchmesser als die gegenüberliegende Erweiterung 5 hat, wobei zwischen den Erweiterungen 4 und 5 die Einschnürung 6 vorgesehen ist. Es handelt sich bei dem Stellelement 3 um ein rotationssymmetrisches Teil, das durch einen Hubmechanismus axial auf und ab bewegt werden kann, der aus Gründen der Vereinfachung der Darstellung in der Figur 1a nicht mitgezeichnet ist.

Die Öffnungsstellung der Spannbacken 1 und 2 ergibt sich, indem das Stellelement 3 in axialer Richtung nach unten verfahren wird, und die obere Erweiterung 5 zwischen die Spannbacken 1, 2 eingeschoben wird. Dadurch werden die Spannbacken 1, 2 gespreizt und können ein Befestigungselement 8 aufnehmen. Diese Figur 1a zeigt das Futter 18 in einer Aufnahmestellung mit nur teilweise geöffneten Spannbacken 1, 2. Das Stellelement 3 befindet sich in dieser Aufnahmestellung mit seiner oberen Erweiterung 5 zwischen den Spannbacken 1, 2. Die Spreizung, die sich in dieser Stellung ergibt, ist in Fig. 1b dargestellt. Durch die Kraft, die das Stellelement 3 auf die Spannbacken 1, 2 und somit auf das Futter 18 in axialer Richtung ausübt, ist das gesamte Futter 18 in vertikaler Richtung nach unten bewegbar. Das Verhältnis zwischen Spreizung und Vertikalbewegung des Futters 18 ist über die Federhärten der Schenkelfedern 13, 14 und der Lagerfedern 7 des Futters 18, sowie der Steigung der Erweiterung 5 möglich. Die Kraftübertragung kann auch durch einen Anschlag, der die obere Erweiterung 5 abschließt erreicht werden.

Figur 1b zeigt eine Schnittdarstellung Ib-Ib des in Figur 1a beschriebenen Bauteils, in der Aufnahmestellung zur Aufnahme von Befestigungselementen 8 in der Position des Stellelements 3 wie in Fig. 1a dargestellt. Diese Position eignet sich besonders für eine horizontale Zuführung von Befestigungselementen 8. Die Spannbacken 1, 2 befinden sich in einer nahezu parallelen Stellung und bilden im Wesentlichen einen Kanal 19 für ein Befestigungselement 8 bzw. dessen Schaft 9. Das Befestigungselement 8 wird in diesem Kanal 19 in Pfeilrichtung geführt. Am Ende der Spannbacken 1; 2 angeordnete Klauen 15, 16 begrenzen in dieser Position die Bewegung der Befestigungselemente 8 in Pfeilrichtung und ermöglichen ein sicheres Auffangen der Befestigungselemente 8 in einer Erfassungsstellung. Die beiden Spannbacken 1 und 2 werden von den in Figur 1b prinzipiell dargestellten Schenkelfedern 13 und 14 gegenseitig zusammengedrückt, womit sie auf das zwischen ihnen geführte Stellelement 3 radial drücken. Dadurch ergibt sich der Spreizwinkel direkt in Abhängigkeit des zwischen den Spannbacken 1, 2 liegenden wirksamen Durchmessers des Stellelements 3.

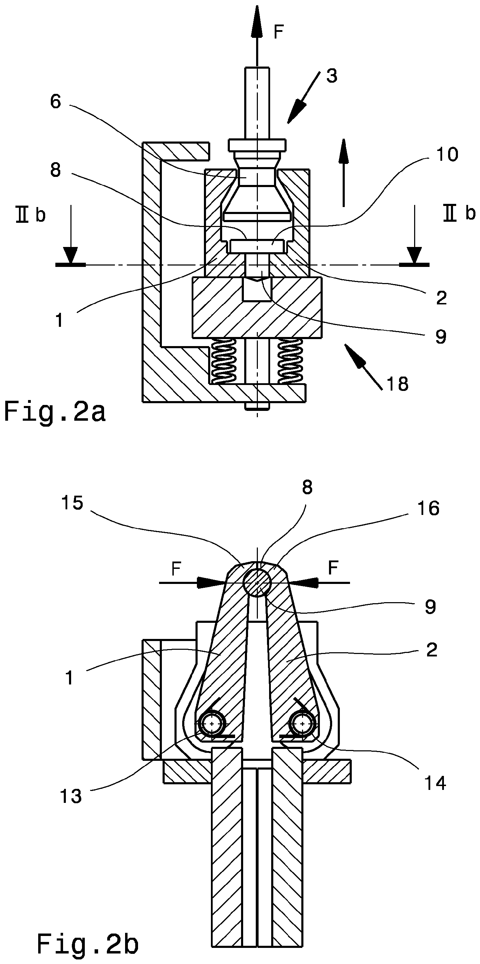

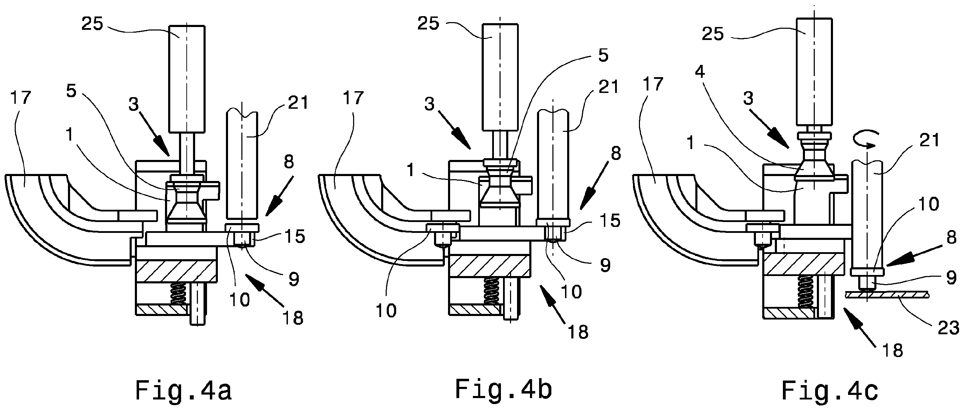

In den Figuren 2a und 2b ist in den beiden Schnittansichten die gleiche Anordnung, wie in Figur 1a und 1b wiedergegeben, jedoch in einer Lage, in der das Stellelement 3 in vertikaler Richtung weiter zwischen den beiden Spannbacken 1 und 2 herausgeschoben ist. Dabei greifen die beiden Spannbacken 1 und 2 in die Einschnürung 6 ein, womit sie, wie Figur 2b zeigt, im Bereich ihrer Klauen 15 und 16 weiter zusammengefahren sind. Durch die Einschnürung 6 können die Spannbacken 1, 2 zusammenfahren und halten dort ein zwischen ihnen mit seinem Schaft 9 geführtes Befestigungselement 8 fest. Das festgehaltene Befestigungselement 8 kann nun einer Antriebseinheit zugeführt werden. In diesem Arbeitsschritt wird das Befestigungselement 8 in vertikaler Richtung an eine Antriebseinheit herangeführt. Diese Vertikalbewegung wird in den Figuren 4a bis 4c näher erläutert.

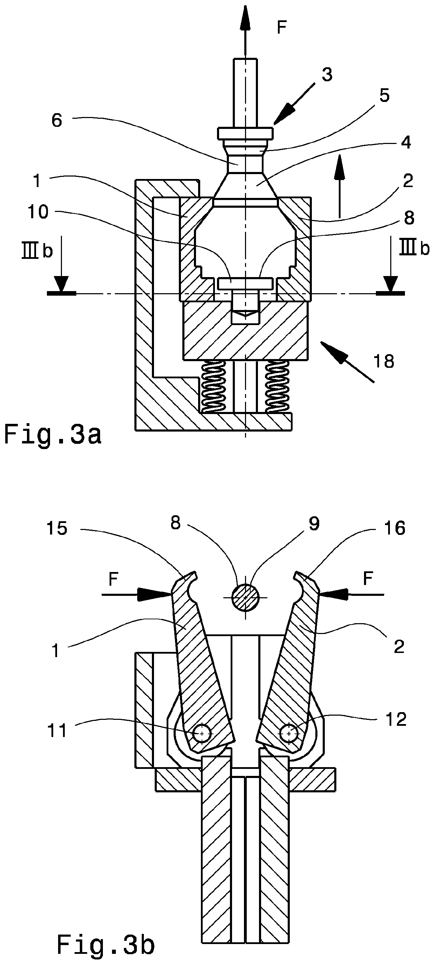

In den Figuren 3a und 3b ist ein weiterer Schritt der Verarbeitung des Befestigungselements 8 dargestellt, bei der die Einspannung des Schaftes 9 gelöst ist, wie die Figur 3b zeigt In der in der Figur 3b dargestellten Position der Spannbacken 1 und 2 lässt sich das Stellelement 3 axial derart verschieben, dass das von den beiden Klauen 15 und 16 gehaltene Befestigungselement 8 nunmehr freigegeben ist. Dazu werden die Spannbacken 1, 2 durch die untere Erweiterung 4, des Stellelements 3 auseinandergespreizt. Ein zuvor gegriffenes Befestigungselement 8 wird dadurch losgelassen und kann weiter verarbeitet werden. Aufgrund des großen Durchmessers der unteren Erweiterung 4 werden die Spannbacken 1, 2 in der Verarbeitungsstellung so weit gespreizt, dass nicht nur der Schaft 9 aus seiner Klemmung gelöst wird, sondern auch eine Antriebseinheit zwischen den Spannbacken 1, 2 verfahren werden kann.

In Figur 3b ist die Schnittansicht IIIb-IIIb gemäß Figur 3b dargestellt, in der die beiden Spannbacken 1 und 2 jeweils um die Achsen 11 und 12 drehbar sind. In dieser Darstellung wird besonders deutlich, dass das Befestigungselement 8 nun zur Weiterverarbeitung freigegeben ist.

Die Figuren 4a bis 4c zeigen schematisch eine Verarbeitungsvorrichtung in einer seitlichen Schnittansicht in den einzelnen Betriebszuständen Aufnahme- (Figur 4a), Erfassungs- (Figur 4b) und Verarbeitungsstellung (Figur 4c), wobei die Verarbeitungsvorrichtung mit einer Zuführeinrichtung 17 für Befestigungselemente 8 versehen ist. Die Befestigungselemente 8 weisen einen Kopf 10 auf. Die Befestigungselemente 8 werden pneumatisch bis zum Futter 18 transportiert. Um die über die Zuführungseinrichtung 17 zugeführten Befestigungselemente 8 durch den im Folgenden näher dargestellten Mechanismus bis in die Verarbeitungsposition unter einer Drehachse 21 sicher zu führen, wird der Mechanismus der Spannbacken 1, 2 verwendet. Das Stellelement 3 wird in diesem Ausführungsbeispiel durch einen Schrittmotor 25 grundsätzlich über einen Axialschieberstange auf und abwärts bewegt. Um in die Aufnahmestellung zu gelangen wird das Stellelement 3 abwärts bewegt.

Zur Aufnahme eines Befestigungselements 8 wird das gesamte Futter 18 durch das Stellelement 3 vertikal nach unten verschoben (siehe Fig. 1a, 1b). Das Stellelement 3 wird in eine Position gestellt, in der das Stellelement 3 mit einem Teil seiner oberen Erweiterung 5 zwischen die Spannbacken 1 und 2 eingreift. In dieser Position lassen die Spannbacken 1, 2 einen über ihre Länge einigermaßen gleichmäßigen Spalt offen, in dem dann der Schaft 9 eines Befestigungselementes 8 vorwärts geführt werden kann, bis er in die Endposition zwischen den Enden der Spannbacken 1, 2 an den Klauen 15 und 16 angelangt ist, wo es schließlich für die weitere Verarbeitung zunächst festgehalten werden kann.

Wie in Fig. 4a zu sehen ist, kann in diesem Zustand der Kopf 10 des Befestigungselements 8 oberhalb der Spannbacken 1, 2 an diesen entlang gleiten. In dieser Aufnahmestellung wird das Befestigungselement 8 bis zum Ende der Spannbacken 1, 2 bis unterhalb der Drehachse 21 transportiert. Wie deutlich wird, ist der Kopf 10 des zugeführten Befestigungselements 8 in vertikaler Richtung von der Drehachse 21 beabstandet.

Im nächsten Schritt wird wie in Figur 4b dargestellt, das Befestigungselement 8 zwischen den Spannbacken 1, 2 eingespannt. Um von der Aufnahmestellung in die Erfassungsstellung zu gelangen wird das Stellelement 3 soweit aufwärts bewegt, dass der Schaft 9 des Befestigungselements 8 zwischen den Spannbacken 1, 2 eingeklemmt ist.

Das dem Befestigungselement 8 zugewandte Ende der Drehachse 21 ist mit einer Fixiereinrichtung versehen, die den Kopf 10 des Befestigungselementes 8 so lange halten kann, bis dieses verarbeitet ist.

In der Erfassungsstellung hält das Futter 18 das Befestigungselement 8 an seinem rechten Ende fest (siehe Figur 2a und b).

Um die Effizienz der Fixiervorrichtung zu erhöhen, wird das zwischen den Klauen 15, 16 der Spannbacken 1, 2 gehaltene Befestigungselement 8 durch das Futter 18 in vertikaler Richtung zur Drehachse 21 bewegt, wo es in unmittelbare Nähe zu der Fixiereinrichtung der Drehachse 21 hingeführt wird, diese vertikale Verschiebung des Futters 18 in Richtung der Drehachse 21 durch die Federlagerung erfolgt gleichzeitig mit dem Einklemmen des Befestigungselements 8 während Aufwärtsbewegung des Stellelements 3. Indem durch die Aufwärtsbewegung des Stellelements 3 die Federlagerung entlastet wird, wird das Futter 18 durch die Federkraft soweit aufwärts bewegt bis die Aufwärtsbewegung des Futters 18 von der Drehachse 21 begrenzt wird. Das Stellelement 3 wird derart verfahren, dass dieses lediglich mit seiner Einschnürung 6 zwischen den Spannbacken 1, 2 liegt.

Indem das Futter 18 in Relation zur Zuführeinrichtung 17 nach oben bewegt wird, können in diesem Betriebszustand keine weiteren Befestigungselemente 8 in das Futter 18 eindringen, da deren Kopf 10 nicht mehr oberhalb der Spannbacken 1, 2 liegt, sondern vielmehr auf gleicher Höhe und somit von diesen blockiert wird. Dadurch erfolgt eine Vorvereinzelung.

Bei der Fixiereinrichtung die an dem, dem Befestigungselement 8 zugewandten Ende der Drehachse 21 liegt, handelt es sich um eine Ansaugöffnung durch die der Kopf 10 des Befestigungselements 8 an die Drehachse 21 angesaugt wird. Es kann aber auch ein mechanischer Klauenverschluss sein. Nachdem das Befestigungselement 8 durch das Futter 18 der Fixiereinrichtung zugeführt wurde, kann diese nunmehr in einfacher Weise tätig werden und das Befestigungselement 8 vorübergehend mit der Drehachse 21 verbinden.

In Figur 4c ist die Verarbeitungsvorrichtung in der Verarbeitungsstellung des Futters 18 dargestellt, denn sobald das Befestigungselement 8 an der Fixiereinrichtung der Drehachse 21 gehalten ist, wird das Befestigungselement 8 vom Futter 18 freigegeben (siehe Figur 3a und b), woraufhin im Weiteren ein prinzipiell dargestellter Antriebsmechanismus in Tätigkeit tritt. Es handelt sich dabei um einen Antriebsmotor, der eine Drehachse 21 antreibt, die gleichzeitig auf das Befestigungselement 8 drückt, das in der Position, wie Figur 3b zeigt, von dem Futter 18 freigegeben ist. Das Befestigungselement 8 wird dann im Anschluß gegen das Bauteil 23 gedrückt und durch Reibschweißen mit diesem verbunden.

Dazu wird das Stellelement 3, wie in Fig. 3a gezeigt, ganz nach oben bewegt, wodurch die Spannbacken 1, 2 durch die untere Erweiterung 4 derart gespreizt werden, dass sowohl das Befestigungselement 8 als auch die antreibende Drehachse 21 durch die gespreizten Spannbacken 1, 2 hindurch in Richtung des Bauteils 23 verfahren werden können. Durch die Drehachse 21 wird das Befestigungselement 8 mit dem Bauteil 23, wie bereits beschrieben, verbunden.

Nach Verbinden des Befestigungselements 8 mit dem Bauteil 23 wird die vorübergehende Fixierung durch die Fixiereinrichtung gelöst, und die Drehachse 21 verfährt wieder in ihre Ausgangsstellung oberhalb des Futters 18. Durch die anschließend erfolgende Abwärtsbewegung des Stellelements 3 beginnt der Vorgang zur Aufnahme und Verarbeitung eines weiteren Befestigungselements 8 von Neuem.

Der Vorgang des derart erfolgenden Reibschweißens kann mit dieser Vorrichtung aufeinanderfolgend an verschiedenen Stellen des Bauteils 23 vor sich gehen, wobei jeweils neu zugeführte Befestigungselemente 8 verarbeitet und mit dem darunterliegenden Bauteil 23 verschweißt werden. Durch diese Art der Zuführung wird eine schnelle und zuverlässige Verarbeitung der Befestigungselemente 8 gewährleistet.

## Patentansprüche

1. Vorrichtung zur Zuführung und Positionierung von Befestigungselementen (8) mit einem mit zwei unter Federspannung stehenden Stoppteilen (1, 2) versehenen Futter (18), zur Halterung eines Befestigungselement (8) zur Weiterverarbeitung, wobei die Stoppteile als Spannbacken (1, 2) ausgebildet sind die je um eine Drehachse schwenkbar am Futter gelagert sind, wobei ferner den Spannbacken ein zwischen diese greifendes Stellelement (3) zugeordnet ist, das in einer Axialrichtung mit einer Einschnürung (6) und zwei benachbarten Erweiterungen (4, 5) versehen und mit einem Axialschieber (21) zur Axialbewegung des Stellelementes (3) verbunden ist, das zur Öffnung und Schließung des Futters (18) unter Spreizung der Spannbacken (1, 2) dient und bei Öffnung des Futters (18) das Befestigungselement (8) zur Verarbeitung freigibt, **dadurch gekennzeichnet, dass** das Futter (18) axial beweglich gelagert ist und dass das Futter (18) durch das Stellelement (3) axial bewegbar ist, indem das Stellelement (3) parallel zur Drehachse der Spannbacken verfahrbar ist.

2. Vorrichtung nach Anspruch 1, **dadurch gekennzeichnet, dass** zur Axialbewegung des Stellelementes (3), ein translatorischer Antrieb (25) mit diesem verbunden ist.

3. Vorrichtung nach Anspruch 1 oder 2, **dadurch gekennzeichnet, dass** die Lagerung des Futters (18) durch Lagerfedern (7) gebildet ist.

4. Vorrichtung nach Anspruch 3, **dadurch gekennzeichnet, dass** durch die Lagerfedern (7) das Futter (18) in einer axial oberen Lage gehalten wird.

5. Vorrichtung nach einem der vorangehenden Ansprüche, **dadurch gekennzeichnet, dass** der Übergang zwischen Einschnürung (6) und Erweiterung (4, 5) des Stellelements (3) stufenlos schräg verläuft.

6. Vorrichtung nach einem der Ansprüche 1 bis 5 zur Verarbeitung von Befestigungselementen mit einem einen Schaft abschließenden Kopf, **dadurch gekennzeichnet, dass** ein dem Futter (18) zugeführtes Befestigungselement (8) mit seinem Kopf (10) auf den in einer Aufnahmestellung parallel liegenden Spannbacken (1, 2) aufliegt und mit seinem Schaft (9) zwischen die Spannbacken (1, 2) ragt.

## Claims

1. Device for feeding and positioning fastening elements (8), having a chuck (18) provided with two stop parts (1, 2) that are under spring tension, for holding a fastening element (8) for its further processing, in which said stop parts are designed as clamping jaws (1, 2) that are each mounted on said chuck in a manner so as to be pivotable about an axis of rotation, said jaws being further associated with an adjusting element (3) engaging therebetween which has a constriction (6) and two adjacent widened sections (4, 5) in an axial direction thereof and is connected to an axial slide (21) for axial movement of the adjusting element (3) which serves to open and close the chuck (18) by spreading the clamping jaws (1, 2) and which will release the fastening element (8) for processing when the chuck (18) is opened, **characterized in that** the chuck (18) is axially movably mounted and that the chuck (18) can be moved axially by the actuator (3) **in that** the actuator (3) can be displaced parallel to the axis of rotation of the clamping jaws.

2. Device according to claim 1, **characterized in that** a translatory drive (25) is connected to the actuator (3) for axially moving the latter.

3. Device according to one of claims 1 or 2, **characterized in that** the chuck (18) is supported by bearing springs (7).

4. Device according to claim 3, **characterized in that** the bearing springs (7) act to hold the chuck (18) in an axial upper position.

5. Device according to one of the preceding claims, **characterized in that** the transition between the constriction (6) and widened sections (4, 5) of the actuator (3) extends continuously at an angle.

6. Device according to one of claims 1 to 5 for processing fastening elements having a head which is provided at the end of a shank, **characterized in that** the head (10) of a fastening element (8) fed to the chuck (18) rests on the clamping jaws (1, 2), which extend in parallel to each other in a receiving position thereof, and its shank (9) projects between said clamping jaws (1, 2).

## Revendications

1. Dispositif d'amenée et de positionnement d'éléments de fixation (8) comprenant un mandrin (18) pourvu de deux parties d'arrêt (1, 2) soumises à l'effet d'une tension de ressort, ledit mandrin étant destiné à retenir un élément de fixation (8) en vue d'un usinage ultérieur, les parties d'arrêt étant réalisées sous la forme de mâchoires de serrage (1, 2), qui sont montées sur le mandrin de manière à pouvoir pivoter chacune autour d'un axe de rotation, dans lequel un élément d'actionnement (3) est associé en outre aux mâchoires de serrage et vient s'insérer entre celles-ci, lequel élément est pourvu dans une direction axiale d'un rétrécissement (6) et de deux élargissements (4, 5) voisins et est relié à un coulisseau axial (21) permettant le mouvement axial de l'élément d'actionnement (3), lequel coulisseau sert à ouvrir et à fermer le mandrin (18) par écartement des mâchoires de serrage (1, 2) et qui, lors de l'ouverture du mandrin (18), libère l'élément de fixation (8) en vue de l'usinage de celui-ci, **caractérisé en ce que** le mandrin (18) est monté mobile axialement et **en ce que** le mandrin (18) est mobile axialement par l'intermédiaire de l'élément d'actionnement (3) du fait que l'élément d'actionnement (3) peut être déplacé parallèlement à l'axe de rotation des mâchoires de serrage.

2. Dispositif selon la revendication 1, **caractérisé en ce que,** pour le mouvement axial de l'élément d'actionnement (3), un entraînement (25) en translation est relié à celui-ci.

3. Dispositif selon la revendication 1 ou 2, **caractérisé en ce que** le montage du mandrin (18) est formé par des ressorts de support (7).

4. Dispositif selon la revendication 3, **caractérisé en ce que** le mandrin (18) est retenu dans une position axialement supérieure par les ressorts de support (7).

5. Dispositif selon l'une quelconque des revendications précédentes, **caractérisé en ce que** la transition entre le rétrécissement (6) et l'élargissement (4, 5) de l'élément d'actionnement (3) s'étend de manière oblique et continue.

6. Dispositif selon l'une quelconque des revendications 1 à 5 destiné à usiner des éléments de fixation comprenant une tête obturant une tige, **caractérisé en ce qu'**un élément de fixation (8) amené au mandrin (18) repose avec sa tête (10) sur les mâchoires de serrage (1, 2) situées en parallèle dans une position de logement et fait saillie, par sa tige (9), entre les mâchoires de serrage (1, 2).
